**Europäisches Patentamt**

**European Patent Office**

**Office européen des brevets**

(11) Veröffentlichungsnummer: **0 359 156**

**A2**

# EUROPÄISCHE PATENTANMELDUNG

(21) Anmeldenummer: **89116704.1**

(22) Anmeldetag: **09.09.89**

(51) Int. Cl.⁵ **H04L 25/36**

(30) Priorität: **14.09.88 DE 3831215**

(43) Veröffentlichungstag der Anmeldung:
**21.03.90 Patentblatt 90/12**

(84) Benannte Vertragsstaaten:
**BE DE GB GR IT LU NL**

(71) Anmelder: **Standard Elektrik Lorenz
Aktiengesellschaft
Lorenzstrasse 10
D-7000 Stuttgart 40(DE)**

(72) Erfinder: **Dietze, Wolfgang
Tubizer Strasse 52
D-7015 Korntal(DE)**

(74) Vertreter: **Brose, Gerhard et al
Standard Elektrik Lorenz AG Patent- und
Lizenzwesen Postfach 30 09 29
D-7000 Stuttgart 30(DE)**

(54) **Netzübergangseinrichtung und Fernmeldeendgerät.**

(57) Gemäß der Erfindung werden für Verbindungen zwischen Endgeräten, die an unterschiedlichen Netzen angeschlossen sind, die für solche Verbindungen vorgesehen, zum Anschluß an das Netz mit der höheren Kapazität vorgesehenen Endgeräte so ausgerüstet, daß sie alternativ (I, II) auch am Netz mit der niedrigeren Kapazität arbeiten könnten. In diese Endgeräte sind, ebenso wie am Übergang zwischen den Netzen, einfache Netzübergangseinrichtungen (30, 60) eingefügt, die Füllbits in geeigneter Weise einfügen und wieder entnehmen.

## Netzübergangseinrichtung und Fernmeldeendgerät

Die Erfindung betrifft eine Netzübergangseinrichtung zur Verwendung zwischen zwei digitalen Fernmeldenetzen mit Übertragungskanälen unterschiedlicher Kapazität und damit unterschiedlicher Übertragungsgeschwindigkeit, insbesondere Fernmeldenetze mit 64kBit/s und 16kBit s, sowie Fernmeldeendgeräte, insbesondere ein Fernsprechendgerät, das zum Anschluß an dasjenige der beiden Fernmeldenetze bestimmt ist, das die Übertragungskanäle mit der höheren Kapazität aufweist.

Aufgrund unterschiedlicher Forderungen werden Fernmeldenetze mit verschiedenen Modulationsarten und Übertragungsgeschwindigkeiten eingeführt.

Für stationäre Fernmeldenetze, wie z.B. für die der Postverwaltungen, kommen dabei im allgemeinen die CCITT-Empfehlungen zur Anwendung, d.h. in Europa eine Kanalbitrate von 64kBit/s und als Modulationsart PCM mit einer Kompandierung nach der A-Kennlinie.

Aus wirtschaftlichen Gründen werden auch stationäre Fernmeldenetze anderer Verwaltungen in Übereinstimmung mit diesen CCITT-Empfehlungen realisiert. Letzteres gilt besonders auch im Hinblick auf die Einführung von ISDN für Teilnehmer in solchen Fernmeldenetzen. Neben den stationären Fernmeldenetzen sind jedoch auch taktische Fernmeldenetze vorhanden. Diese Fernmeldenetze sind durch eine hohe Mobilität der Teilnehmer und mögliche starke Störungen auf den Übertragungsstrecken gekennzeichnet. Diese Einflüsse haben dazu geführt, daß für taktische Fernmeldenetze als Kanalbitrate 16kBit/s oder 32kBit/s und andere Modulationsarten, z.B. Deltamodulation in verschiedenen Varianten festgelegt wurde. Entsprechendes gilt für das in der Einführung befindliche neue zivile Mobilfunknetz (C-Netz).

Aus den unterschiedlichen Kanalbitraten und Modulationsarten ergeben sich Probleme bei Verbindungen zwischen zwei Teilnehmereinrichtungen verschiedener Fernmeldenetze, insbesondere wenn die Sprache oder Daten verschlüsselt übertragen werden sollen. In beiden Fällen kann nicht einfach eine Umsetzung zwischen den unterschiedlichen Kanalbitraten und Modulationsverfahren erfolgen.

Im allgemeinen kann die Ver- und Entschlüsselung in einer Verbindung zwischen zwei Fernmeldenetzen so erfolgen, daß in jeder der beiden Fernmeldenetze eine Einzelkanalverschlüsselung durchgeführt wird und am Übergang zwischen den unterschiedlichen Fernmeldenetzen eine Umcodierung erfolgt.

Die Nachteile dieser Lösung bestehen u.a. darin, daß keine End-zu-End-Verschlüsselung vorliegt, da am Übergang zwischen den beiden unterschiedlichen Fernmeldenetzen die Information im Klartext vorliegen muß, um eine Umcodierung vornehmen zu können.

Erfolgt die Umcodierung in der Vermittlung, so ergeben sich hohe Forderungen an die Nebensprechdämpfung zwischen den einzelnen Anschlüssen, die praktisch nur sehr schwer - wenn überhaupt - eingehalten werden können. Diese Forderungen reduzieren sich, wenn die Umcodierung in einer speziellen Einrichtung durchgeführt wird.

Der Erfindung liegt die Aufgabe zugrunde, eine Netzübergangseinrichtung und eine Anwendung dafür anzugeben, um einen problemlosen Übergang zwischen zwei Netzen zu ermöglichen.

Die Aufgabe wird gelöst durch eine Netzübergangseinrichtung nach der Lehre des Anspruchs 1 und ein Fernmeldeendgerät nach der Lehre des Anspruchs 3. Vorteilhafte Ausgestaltungen der Erfindung sind den Unteransprüchen zu entnehmen.

Gemäß der Erfindung werden für Verbindungen zwischen Endgeräten, die an unterschiedlichen Netzen angeschlossen sind, die für solche Verbindungen vorgesehen, zum Anschluß an das Netz mit der höheren Kapazität vorgesehenen Endgeräte so ausgerüstet, daß sie alternativ auch am Netz mit der niedrigeren Kapazität arbeiten könnten. In diese Endgeräte sind, ebenso wie am Übergang zwischen den beiden Netzen, einfache Netzübergangseinrichtungen eingefügt, die Füllbits in geeigneter Weise einfügen und wieder entnehmen.

Im Gegensatz zu den vorgenannten Varianten erlaubt die vorgeschlagene Lösung sowohl eine End-zu-End-Verschlüsselung als auch eine Datenübertragung. Dabei sind keine besonders hohen Anforderungen an die Nebensprechdämpfungen einzuhalten und nur zwei Einzelkanalschlüsseleinrichtungen in einer Verbindung einzusetzen.

Bei der vorgeschlagenen Lösung entfällt eine Umcodierung der Modulationsarten, dafür muß im Fernmeldenetz A sowohl eine Codiermöglichkeit für die Modulationsart A, z.B. PCM als auch für die Modulationsart B, z.B. Deltamodulation vorhanden sein. Im Falle einer Einzelkanalschlüsseleinrichtung, kann diese, wie noch gezeigt wird, sowohl in einer 16kBit/s- als auch 64kBit/s-Verbindung eingeschaltet werden.

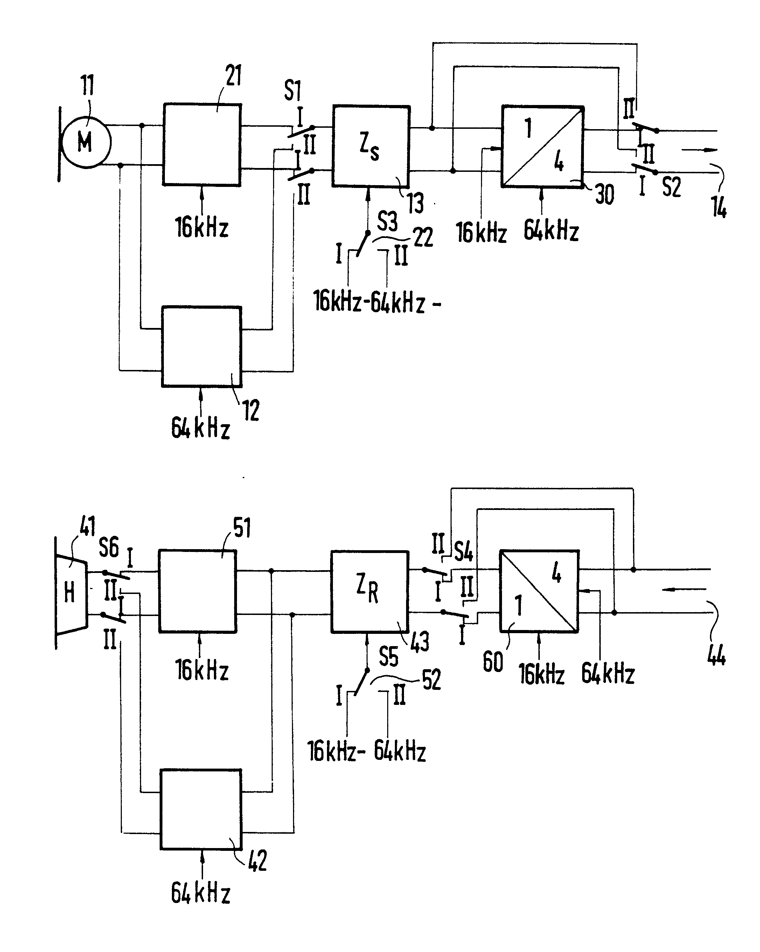

Im folgenden wird die Erfindung anhand eines Ausführungsbeispiels unter Zuhilfenahme der beiliegenden Zeichnung weiter erläutert.

Die Zeichnung zeigt ein Fernsprechendgerät mit Einrichtungen für die PCM-Modulation mit 64kBit/s, Einrichtungen für die Delta-Modulation mit 16kBit/s, Ver- und Entschlüsselungseinrichtungen, eine Netzübergangseinrichtung und Umschaltmöglichkeiten.

Das Fernsprechendgerät weist zum Anschluß an das Fernmeldenetz mit 64kBit/s sendeseitig ein Mikrofon 11 (M) einen PCM-Coder 12 und eine Verschlüsselungseinrichtung 13 ($Z_s$) zum Anschluß an die Leitung 14 und empfangsseitig einen Hörer 41 (H), einen PCM-Decoder 42 und eine Entschlüsselungseinrichtung 43 auf, die an die Leitung 44 angeschlossen sind. PCM-Coder 12 und PCM-Decoder 42 führen die erforderliche Umwandlung zwischen analogen und digitalen Signalen sowie die erforderliche Kompandierung und umgekehrt durch. Die hier genannten digitalen Einrichtungen arbeiten mit einem 64kHz-Takt.

Die übertragungstechnischen Einrichtungen, über die die Leitungen 14 und 44 an die Amtsleitungen angeschlossen sind, beispielsweise Leitungscodierer, Fernspeiseeinrichtungen und Zweidraht-Vierdraht-Umsetzer, sind hier nicht gezeigt.

Zum Anschluß an ein Fernmeldenetz mit 16kBit/s sind zusätzlich sendeseitig ein mit 16kHz arbeitender Delta-Coder 21 und für die Verschlüsselungseinrichtung 13 eine Umschalteinrichtung 22 zur Taktung mit 16kHz statt 64kHz und empfangsseitig ein mit 16kHz arbeitender Delta-Decoder 51 und für die Entschlüsselungseinrichtung 43 eine Umschalteinrichtung 52 zur Taktung mit 16kHz statt 64kHz vorgesehen.

Außerdem ist eine Netzübergangseinrichtung enthalten, die aus einem sendeseitigen Teil 30 und einem empfangsseitigen Teil 60 besteht. Diese Netzübergangseinrichtung erlaubt es, das Fernsprechendgerät als 16kBit/s-Endgerät in Verbindung mit einem anderen 16kBit/s-Endgerät zu betreiben, obwohl nur ein Anschluß an das 64kBit/s-Netz vorhanden ist.

Über Schalter S1 bis S6 wird das Endgerät zwischen den beiden Betriebsarten umgeschaltet In der Figur sind alle Schalter in der Stellung I gezeichnet, wodurch eine Verbindung mit einer 16kBit/s-Gegenstelle möglich ist. In der nicht gezeichneten Stellung II ist eine Verbindung mit einer 64kBit/s-Gegenstelle möglich.

Der sendeseitige Teil 30 der Netzübergangseinrichtung arbeitet nun so, daß die ankommenden Nutzbits mit einem Takt von 16kHz übernommen und mit einem Takt von 64kHz wieder weitergegeben werden. Dazwischen müssen dann Füllbits eingeschoben werden. Beim gegebenen Zahlenbeispiel kommen auf jedes Nutzbit drei Füllbits Der Abstand der Nutzbits untereinander bleibt aber unverändert.

Im einfachsten Fall können die Füllbits jeweils wertgleich mit den ihnen vorausgehenden Nutzbits sein. Dies kann beispielsweise dadurch realisiert werden, daß in einen Zwischenspeicher mit einem Takt von 16kHz eingeschrieben und mit einem Takt von 64kHz wieder ausgelesen wird, wobei dann jedes eingeschriebene Bit viermal hintereinander ausgelesen wird. Die beiden Takte brauchen dabei nicht aufeinander synchronisiert zu sein.

Eine andere Realisierungsmöglichkeit besteht in der Verwendung von 4-Bit-Parallel-Serien-Wandlern, die vorzugsweise durch Schieberegister realisiert werden. Jedes ankommende Nutzbit wird parallel allen vier Eingängen zugeführt und damit viermal hintereinander wieder ausgegeben. Es ist auch möglich, die Nutzbits nur jeweils dem ersten und dritten Eingang zuzuführen und die beiden anderen Eingänge entweder an festes Potential zu legen oder ihnen die Nutzbits invertiert zuzuführen. Damit wird, was oft erwünscht ist, ein möglichst häufiger Zeichenwechsel erreicht. Die Nutzbits als die jeweils ersten Bits einer Vierergruppe sind dennoch eindeutig auswertbar.

Der empfangsseitige Teil 60 der Netzübergangseinrichtung arbeitet gerade umgekehrt. Aus dem mit 64kBit/s ankommenden Datenstrom wird jedes vierte Bit ausgeblendet und als Datenstrom mit 16kBit/s weitergegeben. Wenn die Füllbits mit den jeweils vorausgehenden Nutzbits wertgleich sind, braucht dabei nicht einmal darauf geachtet zu werden, daß jeweils das erste Bit einer Viergruppe weitergegeben wird.

Zur Realisierung kommt wieder ein Zwischenspeicher in Betracht, bei dem von vier aufeinanderfolgend eingeschriebenen Bits nur jeweils eines ausgelesen wird. Auch die Realisierung durch einen 4-Bit-Serien-Parallel-Wandler, bei dem nur einer der vier Ausgänge beschaltet ist, kommt in Betracht.

Während die Realisierung mit Parallel-Serien- und Serien-Parallel-Wandlern nur in Frage kommt, wenn die höhere Übertragungsgeschwindigkeit ein ganzzahliges Vielfaches der niederen Übertragungsgeschwindigkeit ist, ist die Realisierung mit Zwischenspeichern, in die mit einem Takt eingeschrieben und mit einem anderen Takt ausgelesen wird, auf beliebige Verhältnisse der Übertragungsgeschwindigkeiten anwendbar.

Aus dem Vorangegangenen folgt, daß eine Umschaltung der Fernsprechgeräte nur im Fernmeldenetz mit der hohen Übertragungsgeschwindigkeit erforderlich ist. Die Umschaltung kann hierbei manuell durch den Teilnehmer oder automatisch erfolgen.

- Eine automatische Umschaltung kann dadurch erfolgen, daß die Einrichtungen der Vermittlung des a-Teilnehmers in dem Fernmeldenetz mit 64 kBit/s aus dessen gewählter Zieladresse erkennen, ob eine Umsteuerung erforderlich ist und einen entsprechenden Umsteuerbefehl an die Einrichtungen des a-Teilnehmers bewirken.

- Eine Umschaltung kann auch dadurch erfolgen, daß nach Verbindungsaufbau von den Einrichtungen im Netz des gerufenen Teilnehmers ein Rückwärtszeichen zu den Einrichtungen des rufenden Teilnehmers gesendet und so eine Umschaltung veranlaßt wird.

- Beim Verbindungsaufbau vom b-Teilnehmer aus dem Fernmeldenetz mit 16 kBit/s zum a-Teilnehmer wird von den Einrichtungen im Netz des b-Teilnehmers ein Vorwärtszeichen zu den Einrichtungen des a-Teilnehmers gesendet und so eine Umschaltung veranlaßt.

- Die Einrichtung der Vermittlung des a-Teilnehmers erkennt aus der Ursprungsadresse, ob eine Umsteuerung erforderlich ist, und bewirkt einen entsprechenden Umsteuerbefehl an die Einrichtung des a-Teilnehmers.

- Mit dem Umschaltezeichen kann auch noch die Stromversorgung der einzelnen Einrichtungen geschaltet werden, um u.a. die Leistungsaufnahme zu reduzieren.

Die für die Umschaltung erforderliche Signalisierung kann eine In-Band-Signalisierung sein, da sie in der Verbindungsaufbauphase erfolgt. Sie kann aber auch in einem separaten Dienstkanal (D-Kanal bei ISDN) erfolgen.

## Ansprüche

1. Netzübergangseinrichtung zwischen zwei digitalen Fernmeldenetzen mit Übertragungskanälen unterschiedlicher Kapazität und damit unterschiedlicher Übertragungsgeschwindigkeit, insbesondere Fernmeldenetze mit 64kBit/s und 16kBit/s, **dadurch gekennzeichnet,** daß beim Übergang von niedriger zu höherer Übertragungsgeschwindigkeit Füllbits zwischen die ankommenden Nutzbits derart eingeschoben werden, daß die zeitliche Lage der Nutzbits untereinander weitgehend erhalten bleibt und daß beim Übergang von höherer zu niedriger Übertragungsgeschwindigkeit nur die durch ihre zeitliche Lage gekennzeichneten Nutzbits weiter übertragen werden.

2. Netzübergangseinrichtung nach Anspruch 1, dadurch gekennzeichnet, daß die Füllbits jeweils wertgleich mit den ihnen vorausgehenden Nutzbits sind.

3. Fernmeldeendgerät, insbesondere Fernsprechendgerät, mit einer Einrichtung zum Anschluß an ein erstes digitales Fernmeldenetz mit Übertragungskanälen vorgegebener erster Kapazität und Übertragungsgeschwindigkeit, **dadurch gekennzeichnet,** daß eine Zusatzeinrichtung (21, 22, 51, 52) vorhanden ist, durch die die Einrichtung (11, 12, 13, 14, 41, 42, 43, 44) derart ergänzt wird, daß ein Anschluß an ein zweites digitales Fernmeldenetz mit Übertragungskanälen einer zweiten Kapazität und Übertragungsgeschwindigkeit möglich ist, wobei die zweite Kapazität und Übertragungsgeschwindigkeit (z.B. 16kBit/s) geringer ist als die erste Kapazität und Übertragungsgeschwindigkeit (z.B. 64kBit/s), daß eine Netzübergangseinrichtung (30, 60) nach einem der Ansprüche 1 oder 2 vorhanden ist und daß wahlweise (S1 ... S6) die Einrichtung allein oder die Einrichtung zusammen mit der Zusatzeinrichtung und der Netzübergangseinrichtung mit dem ersten Fernmeldenetz verbindbar ist.

4. Fernmeldeendgerät nach Anspruch 3, dadurch gekennzeichnet, daß das Fernmeldeendgerät ein Fernsprechendgerät zur verschlüsselten (13, 43) Sprachübertragung ist, daß die Einrichtung zum Anschluß an ein erstes Fernmeldenetz sendeseitig einen Coder vom Typ A, z.B. einen PCM-Coder (12) und eine Verschlüsselungseinrichtung (13) und empfangsseitig einen Decoder vom Typ A, z.B. einen PCM-Decoder (42) und eine Entschlüsselungseinrichtung (43) aufweist, wobei der Codec vom Typ A, z.B. PCM-Coder und PCM-Decoder zwischen analogen und solchen PCM-Signalen und zurück wandeln, die der Übertragungsgeschwindigkeit des ersten Fernmeldenetzes entsprechen und wobei die Verschlüsselungs- und die Entschlüsselungseinrichtung mit dem der Übertragungsgeschwindigkeit im ersten Fernmeldenetz entsprechenden Takt arbeiten, daß die Zusatzeinrichtung sendeseitig einen Coder vom Typ B, z.B. einen Delta-Coder (21) und empfangsseitig einen Decoder vom Typ B, z.B. einen Delta-Decoder (51) aufweist, daß der Codec vom Typ B, z.B. Delta-Coder und Delta-Decoder zwischen analogen und solchen pulsdeltamodulierten Signalen und zurück wandeln, die der Übertragungsgeschwindigkeit des zweiten Fernmeldenetzes entsprechen, und daß durch die Zusatzeinrichtung (22, 52) der Takt für die Verschlüsselungs- und die Entschlüsselungseinrichtung auf den der Übertragungsgeschwindigkeit im zweiten Fernmeldenetz entsprechenden Wert umschaltbar ist.